# EUROPEAN PATENT APPLICATION

(11) **EP 3 489 981 A1**
(43) Date of publication of application: **29.05.2019**
(21) Application number: 17830699.9
(22) Date of filing: 25.05.2017
(51) Int. Cl.: H01H 33/59, B60R 16/02, H01H 31/12, H01H 85/02, H01H 85/46, H01H 85/28

(54) **SWITCHING DEVICE, MOVING BODY AND POWER SUPPLY SYSTEM**

(30) Priority: 19.07.2016 JP 2016141035
(71) Applicant: Sony Corporation, Tokyo 108-0075 (JP)
(72) Inventor: MORITA, Tadashi, Tokyo 141-0022 (JP)
(74) Representative: 2SPL Patentanwälte PartG mbB
(86) International application number: PCT/JP2017/019615
(87) International publication number: WO 2018/016179

(57) **Abstract**

[Object] To provide a switching device that can safely interrupt DC power with a simple configuration without causing an arc when interrupting power by means of a switch.

[Solution] There is provided a switching device including: a switch provided for a system configured to flow power; and a fuse provided in parallel with the switch, a conductor being sealed in the fuse. The fuse is not blown by a current flowing in a state where the switch is closed with respect to the system, and is blown by a current flowing in a state where the switch is opened with respect to the system. When the switch is brought into the state where the switch is closed from the state where the switch is opened with respect to the system, the fuse is replaced by an unblown fuse.

## Description

### Technical Field

The present disclosure relates to a switching device, a movable body, and a power supply system.

### Background Art

In either DC power feeding or AC power feeding, an arc discharge occurs at power off. In the case of AC, since there is an instant at which the voltage becomes zero at every predetermined time (for example, every 10 milliseconds), the arc discharge stops spontaneously at least within the above-described predetermined time (for example, within 10 milliseconds). In DC power feeding, however, the arc discharge does not stop spontaneously since there is no instant at which the voltage becomes zero.

Therefore, technologies for the purpose of suppressing occurrence of an arc discharge at power off in the case of DC power feeding have been disclosed (see Patent Literature 1, Patent Literature 2 and the like).

### Citation List

### Patent Literature

Patent Literature 1: JP 2003-203721A
Patent Literature 2: JP 2014-522088T

### Disclosure of Invention

### Technical Problem

Occurrence of an arc discharge causes a failure due to degradation of an electrode or the like. Although there is a mechanism for extinguishing an arc, repeated arc extinction results in degradation of the mechanism itself. In addition, the mechanism itself is increased in size when interrupting a large current.

Therefore, the present disclosure proposes a switching device, a movable body, and a power supply system being novel and improved that can safely interrupt DC power with a simple configuration without causing an arc when interrupting power by means of a switch.

### Solution to Problem

According to the present disclosure, there is provided a switching device including: a switch provided for a system configured to flow power; and a fuse provided in parallel with the switch, a conductor being sealed in the fuse. The fuse is not blown by a current flowing in a state where the switch is closed with respect to the system, and is blown by a current flowing in a state where the switch is opened with respect to the system. When the switch is brought into the state where the switch is closed from the state where the switch is opened with respect to the system, the fuse is replaced by an unblown fuse.

In addition, according to the present disclosure, a movable body including the above-described switching device is provided.

In addition, according to the present disclosure, there is provided a power supply system including: a battery configured to supply DC power; a drive unit configured to be driven by the DC power supplied from the battery; and the at least one switching device provided between the battery and the drive unit.

### Advantageous Effects of Invention

According to the present disclosure as described above, a switching device, a movable body, and a power supply system being novel and improved that can safely interrupt DC power with a simple configuration without causing an arc when interrupting power by means of a switch can be provided.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram showing a configuration example of a switching device 100 according to an embodiment of the present disclosure.
FIG. 2 is an explanatory diagram showing a state in which a fuse has been blown in the switching device 100 according to the embodiment shown in FIG. 1.
FIG. 3 is an explanatory diagram showing a state in which the blown fuse has been replaced by an unblown fuse in the switching device 100 according to the embodiment.
FIG. 4 is an explanatory diagram showing an example of time transition of a current flowing into a load through a switch and fuse of the switching device 100 according to the embodiment.
FIG. 5 is an explanatory diagram showing a configuration example of a switch of the switching device 100 according to the embodiment.
FIG. 6 is an explanatory diagram showing a configuration example of a switch of the switching device 100 according to the embodiment.
FIG. 7 is an explanatory diagram showing another example of the switching device 100 according to the embodiment.
FIG. 8 is an explanatory diagram showing a state in which a thermostat is turned off and a fuse has been blown in the switching device 100 according to the embodiment shown in FIG. 7.
FIG. 9 is an explanatory diagram showing an example of time transition of a current flowing into the load through the thermostat and fuse of the switching device 100 according to the embodiment.
FIG. 10 is an explanatory diagram showing another example of the switching device 100 according to the embodiment.
FIG. 11 is an explanatory diagram showing a state in which the fuse has been blown in the switching device 100 according to the embodiment shown in FIG. 10.
FIG. 12 is an explanatory diagram showing a configuration example of the switching device 100 including diodes bidirectionally downstream of the thermostat and fuse shown in FIG. 7.
FIG. 13 is an explanatory diagram showing a functional configuration example of a movable body including the switching device 100.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Embodiment of the present disclosure
   1.1. Overview
   1.2. Configuration example
2. Application example
3. Conclusion

### <1. Embodiment of the present disclosure>

### [1.1. Overview]

Before describing an embodiment of the present disclosure in detail, an overview the embodiment of the present disclosure will be described.

In either DC power feeding or AC power feeding, a spark or an arc discharge due to a potential difference between electrodes occurs at power off when a voltage and a current reach certain predetermined values or higher. In the case of AC, since there is an instant at which the voltage becomes zero at every predetermined time (for example, every 10 milliseconds), the arc discharge stops spontaneously at least within the above-described predetermined time (for example, within 10 milliseconds).

In DC power feeding, however, the arc discharge does not stop spontaneously since there is no instant at which the voltage becomes zero unlike AC power feeding. The arc discharge may cause degradation of contacts, such as metal fusing or welding, and may reduce reliability of power feeding.

Therefore, technologies for the purpose of suppressing occurrence of an arc discharge at power off in the case of DC power feeding have been disclosed. For example, an avoidance technology by connecting a snubber circuit, in which a capacitor and a resistor are used, between oscillating contact elements has been conventionally proposed.

In order to prevent an arc discharge using the snubber circuit in the case of DC power feeding, however, sufficient effects will not be obtained unless a large-capacity capacitor and a small resistor are used. For obtaining sufficient effects, the snubber circuit will be increased in size. Moreover, in the case of preventing an arc discharge using the snubber circuit, a short-circuit current due to charges charged in the large-capacity capacitor will be increased if an attempt is made to make reconnection to a DC power source after DC power off, so that contacts will be welded.

Furthermore, in a case of performing DC power feeding by inserting/removing an insertion plug in/from a plug receiver, there is also a technology for providing the insertion plug with a mechanical switch to prevent occurrence of an arc discharge, and operating the mechanical switch when removing the insertion plug from the plug receiver, thereby preventing occurrence of an arc discharge. However, this technology raises the need to force a user to perform a complicated operation of operating the mechanical switch at removal of the insertion plug.

There is also a method of mechanically removing an arc discharge. In order to mechanically remove an arc discharge, however, a structure is required which increases the speed of detaching contacts or detaches arcs by a magnetic circuit, resulting in size increase of a circuit for removing an arc discharge.

The technologies for the purpose of suppressing occurrence of an arc discharge at power off in the case of DC power feeding are found additionally in the above-mentioned Patent Literature 1, Patent Literature 2 and the like.

The above-mentioned Patent Literature 1 discloses a technology for providing a switching element on a path along which a current flows during DC power feeding, and turning off the switching element at removal of the insertion plug from the plug receiver, thereby suppressing occurrence of an arc discharge.

According to the technology disclosed in the Patent Literature 1, however, power is consumed in the switching element during DC power feeding and the switching element generates heat during DC power feeding since a current flows through the switching element during DC power feeding.

The above-mentioned Patent Literature 2 also discloses a technology for providing an arc absorbing circuit including switching elements on a path along which a current flows during DC power feeding, and turning off the switching elements at removal of the insertion plug from the plug receiver, thereby suppressing occurrence of an arc discharge.

According to the technology disclosed in the Patent Literature 2, however, two switching elements as the arc absorbing circuit and a timer for turning off the switching element are provided, which requires a circuit for temporarily storing arc power and discharging the stored power, resulting in size increase of the circuit.

Occurrence of an arc discharge causes a failure due to degradation of an electrode or the like. As a mechanism for extinguishing an arc, there is another mechanism for extinction by increasing the contact interval of a circuit breaker or mounting magnets to extend an arc, however, repeated arc extinction results in degradation of the mechanism itself. In addition, the mechanism itself is increased in size when interrupting a large current.

Therefore, in view of the points described above, the discloser of the present application has made intense studies about a technology capable of suppressing occurrence of an arc when interrupting power although with a simple configuration. As a result, by providing a switch in a system in which a current flows and providing a fuse in parallel with the switch as described below, the discloser of the present application has led to devise a technology capable of suppressing occurrence of an arc when interrupting power by means of a switch although with a simple configuration.

An overview of an embodiment of the present disclosure has been described above. Subsequently, the embodiment of the present disclosure will be described in detail.

### [1.2. Configuration example]

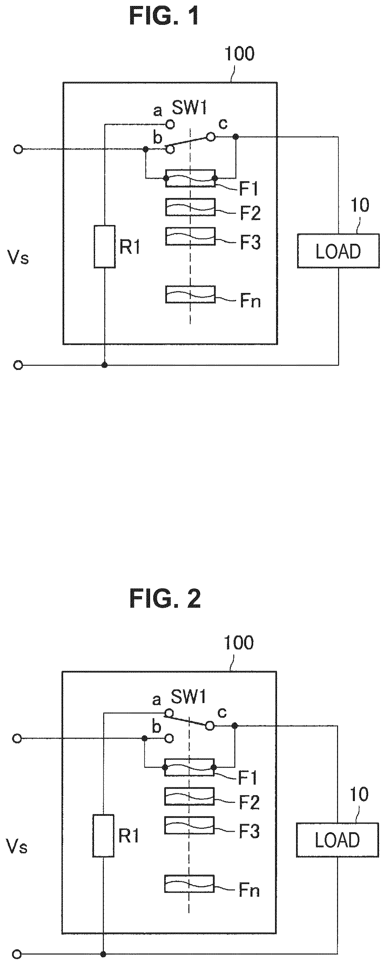

FIG. 1 is an explanatory diagram showing a configuration example of a switching device 100 according to the embodiment of the present disclosure. A configuration example of the switching device 100 according to the embodiment of the present disclosure will be described below using FIG. 1.

As shown in FIG. 1, the switching device 100 according to the embodiment of the present disclosure includes a switch SW1, fuses F1, F2, ..., and Fn, and a resistor R1. The switching device 100 is a device for switching between supply and interruption of power from a DC power source (not shown) having a voltage Vs to a load 10.

The switch SW1 is a mechanical switch, for example. The switch SW1 has a configuration in which a contact a and a contact c are connected at the time (normal time) when a current is supplied from the DC power source (not shown) having the voltage Vs to the load 10, and a contact b and the contact c are connected when the current from the DC power source is interrupted. Switching of the contacts of the switch SW1 may be performed manually or by a remote operation.

FIG. 1 shows a configuration in which the fuses F1, F2, ..., and Fn are provided in parallel with the switch SW1. For each of the fuses F1, F2, ..., and Fn, such a fuse having a conductor sealed by a glass tube or the like and being blown at a predetermined rating, for example, at about 20W with 10V and 2A is used. In addition, the fuses F1, F2, ..., and Fn have a rating that is blown by a current flowing from the DC power source to the load 10 through the fuses F1, F2, ..., and Fn in a state where the contact b and the contact c of the switch SW1 are connected. Note that only one of the fuses F1, F2, ..., and Fn is connected in parallel with the switch SW1.

When the state in which the contact b and the contact c of the switch SW1 are connected is brought about in the state where power is supplied from the DC power source to the load 10, a current from the DC power source to the load 10 flows in the fuse F1. Since the current from the DC power source to the load 10 is a current that blows the fuse F1, the fuse F1 is blown when the state in which the contact b and the contact c of the switch SW1 are connected is brought about.

FIG. 2 is an explanatory diagram showing the state in which the contact b and the contact c of the switch SW1 are connected, and the fuse F1 has been blown in the switching device 100 according to the embodiment of the present disclosure. Consequently, even with the contacts of the switch SW1 being switched, an arc will not occur in the switch SW1.

Depending on the situation of the resistor of the load 10, in the case where the state in which the contact b and the contact c of the switch SW1 are connected is brought about and a current flows from the DC power source to the fuse F1, the fuse F1 may not be blown with that current.

Considering such a case, the switching device 100 has a configuration in which the resistor R1 is connected downstream of the switch SW1 and the fuse F1 as shown in FIG. 1. The resistor R1 has a resistance value for flowing such a current that blows the fuse F1 from the DC power source. By having the resistor R1, the switching device 100 can cause the fuse F1 to be blown without depending on the situation of the resistor of the load 10 in the case where the state in which the contact b and the contact c of the switch SW1 are connected is brought about.

In other words, it is not necessary to provide the switching device 100 with the resistor R1 as long as the fuse F1 can be blown even if the situation of the resistor of the load 10 is in any case.

When the state in which the contact a and the contact c are connected is brought about again from the state in which the contact b and the contact c of the switch SW1 are connected, the fuse connected in parallel with the switch SW1 is replaced by a new fuse (unblown fuse) in the switching device 100 shown in FIG. 1.

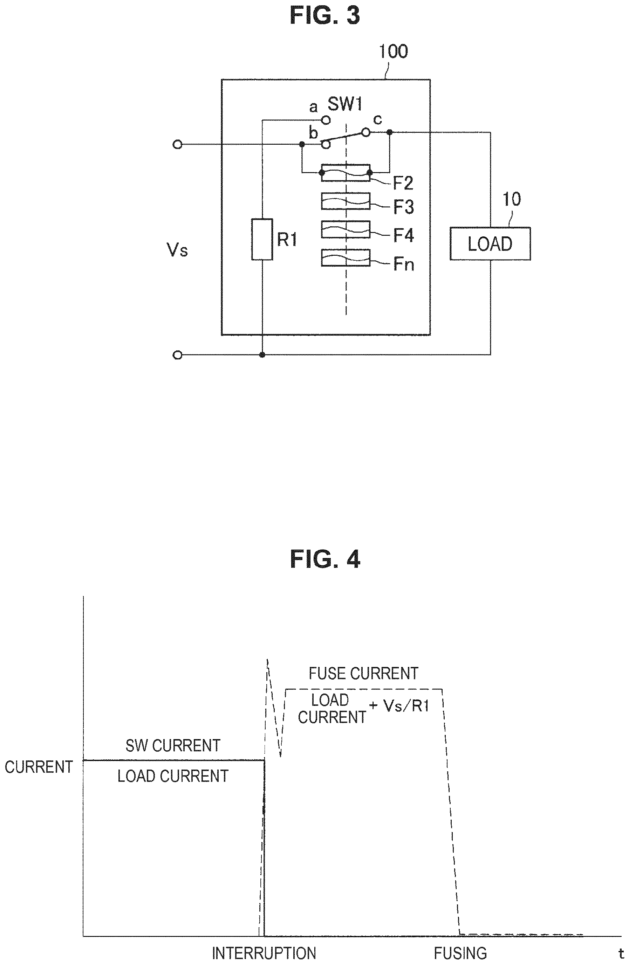

FIG. 3 is an explanatory diagram showing a state in which the fuse connected in parallel with the switch SW1 has been newly replaced by an unblown fuse F2 in the switching device 100. In this manner, replacement of the fuse connected in parallel with the switch SW1 by a new fuse allows occurrence of an arc in the switch SW1 to be prevented even if the contact b and the contact c of the switch SW1 are connected again. Note that the blown fuse may be recovered.

FIG. 4 is an explanatory diagram showing an example of time transition of a current flowing into the load 10 through the switch SW1 and the fuse F1 of the switching device 100 shown in FIG. 1. In the state in which the contact a and the contact c of the switch SW1 are connected, sa constant current is flowing into the switch SW1, while a current hardly flows into the fuse F1.

When the state in which the contact b and the contact c of the switch SW1 are connected is brought about at a certain time point, the current flowing into the switch SW1 becomes 0, while a current flows into the fuse F1 from the DC power source. In addition, the current flowing into the fuse F1 becomes the sum of the current flowing into the load 10 and the current (Vs/R1) flowing through the resistor R1. Assume that this current flowing into the fuse F1 is a current sufficient for blowing the fuse F1. Then, when the current continues to flow into the fuse F1, the fuse F1 is blown at a certain time point, and the current flowing into the load 10 from the DC power source becomes 0.

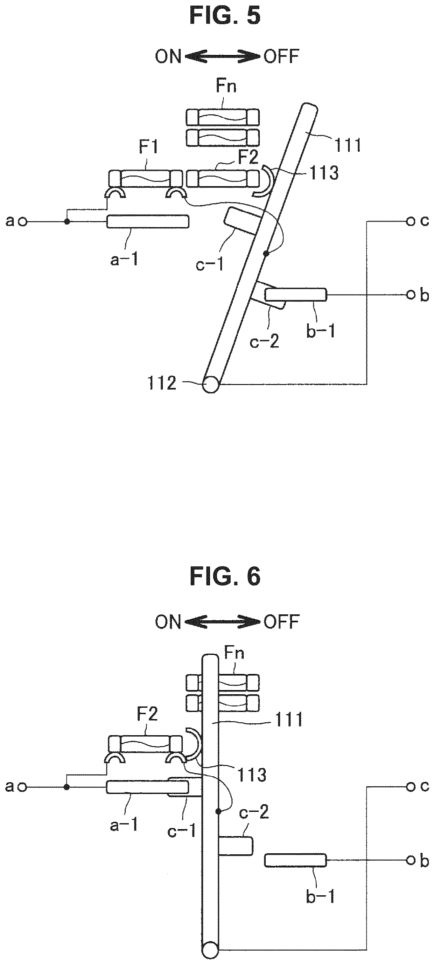

FIG. 5 and FIG. 6 are explanatory diagrams showing a structure example of the switch SW1. The switch SW1 includes a switch lever 111 including a fuse holder 113. The switch lever 111 rotates around a lever supporting point 112 in a predetermined range. The switch lever 111 may be operated by a human hand, or may be operated remotely.

Shown in FIG. 5 is an example of the switch SW1 brought into the state in which the contact b and the contact c are connected. That is, the fuse F1 is in a blown state. In addition, the unblown fuse F2 has been set in the fuse holder 113. When the state in which the contact a and the contact c are connected is brought about as shown in FIG. 6 from this state, the fuse F1 is pushed by the fuse F2, and the unblown fuse F2 is mounted.

That is, in the switching device 100 shown in FIG. 1, blowing of a fuse and setting of an unblown new fuse will be repeated by the operation of the switch lever 111.

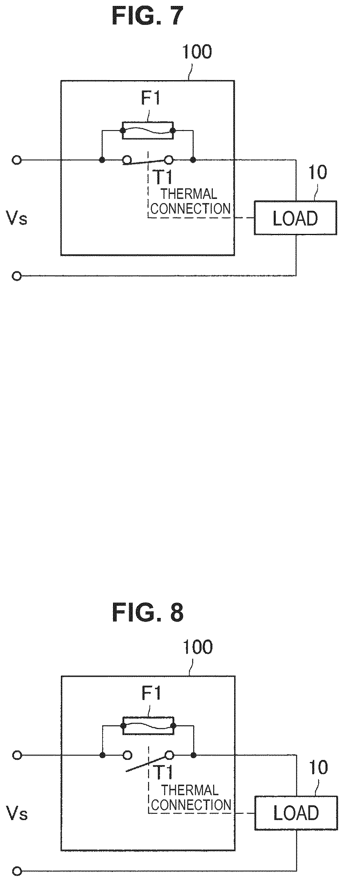

Another example of the switching device will be shown. FIG. 7 is an explanatory diagram showing another example of the switching device 100 according to an embodiment of the present disclosure. Another example of the switching device 100 according to the embodiment of the present disclosure will be described below using FIG. 7.

The switching device 100 shown in FIG. 7 includes a thermostat T1 and the fuse F1. The thermostat T1 is provided on a power supply path from the DC power source (not shown) having the voltage Vs to the load 10. In addition, the fuse F1 is provided in parallel with the thermostat T1. The fuse F1 is such a fuse that is blown at a predetermined rating, for example, at about 20W with 10V and 2A. In addition, the fuse F1 has a rating that is blown by a current flowing from the DC power source to the load 10 through the fuse F1 in a state where the thermostat T1 is off.

The thermostat T1 is configured so as to be brought into an off state when the temperature of the load 10 becomes more than or equal to a predetermined value. This predetermined value is set at a temperature that can be reached when a current larger than expected flows into the load 10 or the load 10 fails, for example. In the switching device 100 shown in FIG. 7, when the temperature of the load 10 becomes more than or equal to the predetermined value, the thermostat T1 is turned off, and the current from the DC power source to the load 10 flows only through the fuse F1. When the current from the DC power source to the load 10 flows only through the fuse F1, the fuse F1 is blown. FIG. 8 is an explanatory diagram showing the state in which the thermostat T1 is turned off and the fuse F1 has been blown in the switching device 100 shown in FIG. 7.

If the fuse F1 is not provided, an arc may occur in the thermostat T1 when the thermostat T1 is turned off. By providing the fuse F1 and flowing a current from the DC power source into the fuse F1 to blow the fuse F1, the switching device 100 shown in FIG. 7 can prevent occurrence of an arc in the thermostat T1 in the case where the temperature of the load 10 becomes more than or equal to the predetermined value.

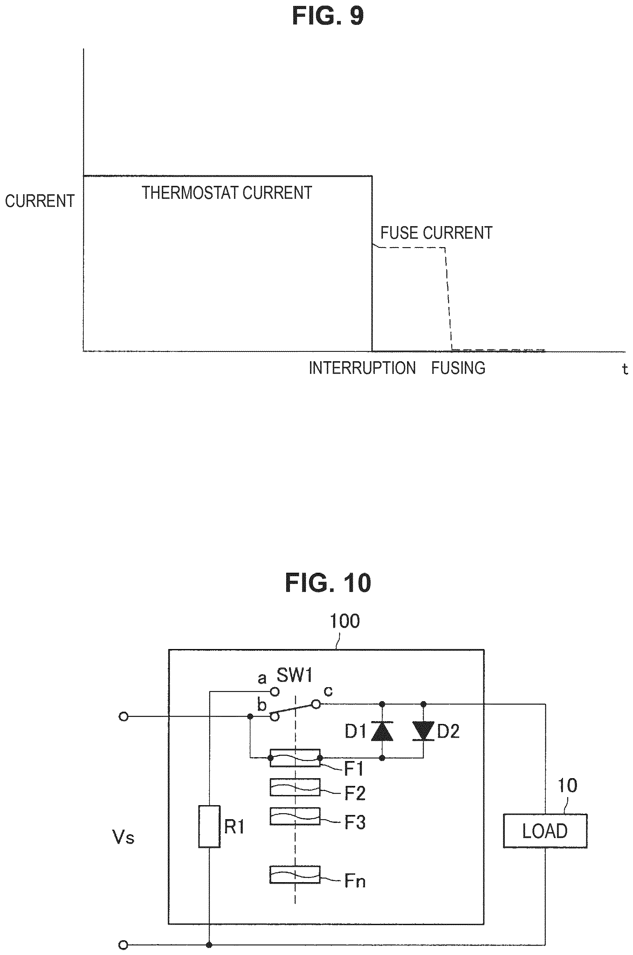

FIG. 9 is an explanatory diagram showing an example of time transition of the current flowing into the load 10 through the thermostat T1 and the fuse F1 of the switching device 100 shown in FIG. 7. In the state where the thermostat T1 is on, a constant current flows into the thermostat T1, while a current hardly flows into the fuse F1.

When the thermostat T1 is brought into the off state at a certain time point, the current flowing into the thermostat T1 becomes 0, while a current flows into the fuse F1 from the DC power source. Assume that this current flowing into the fuse F1 is a current sufficient for blowing the fuse F1. Then, when the current continues to flow into the fuse F1, the fuse F1 is blown at a certain time point, and the current flowing into the load 10 from the DC power source becomes 0.

Another example of the switching device will be shown. FIG. 10 is an explanatory diagram showing another example of the switching device 100 according to an embodiment of the present disclosure. Another example of the switching device 100 according to the embodiment of the present disclosure will be described below using FIG. 10.

FIG. 1 shows the example of the switching device 100 in which the mechanical switch and the fuse are connected in parallel. Shown in FIG. 10 is an example of the switching device 100 in which diodes are bidirectionally provided downstream of the mechanical switch and the fuse.

In the state where the contact a and the contact c of the switch SW1 are connected, a contact resistance occurs between the contacts. The current flowing into the load 10 is shunted by the contact resistance and the resistance that the fuse F1 has. Consequently, an inrush current when turning on the switch SW1 (which refers to bringing the contact a and the contact c into a connected state), the time of a failure of the load 10, or the like may cause the fuse F1 to be blown even in the state where the contact a and the contact c of the switch SW1 are connected.

Therefore, the switching device 100 shown in FIG. 10 includes diodes D1, D2 bidirectionally downstream of the switch SW1 and the fuse F1. These diodes D1, D2 represent an example of a current restriction unit of the present disclosure, and are for restraining shunting to the fuse F1 until a certain voltage occurs between the contacts of the switch SW1. It is known that an arc between the contacts occurs at about 15 V, for example. Consequently, the switching device 100 shown in FIG. 10 utilizes a forward voltage drop in the diodes D1, D2 to restrain shunting to the fuse F1 until a certain constant voltage occurs between the terminals of the switch SW1.

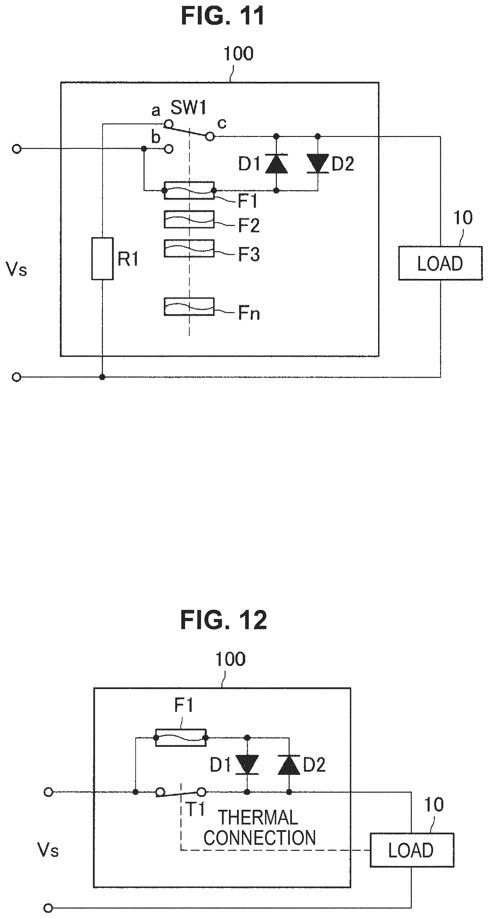

FIG. 11 is an explanatory diagram showing the state in which the contact b and the contact c of the switch SW1 in the switching device 100 according to an embodiment of the present disclosure are connected, and the fuse F1 has been blown. In this manner, since a current flows into the fuse F1 also when the contacts of the switch SW1 are switched, an arc will not occur in the switch SW1. Then, since the fuse F1 is soon blown by the current flowing into the load 10 from the DC power source, the switching device 100 can safely disconnect the load 10 from the DC power source.

The same also applies to the switching device 100 shown in FIG. 7. That is, when the thermostat T1 is in the on state, a contact resistance occurs between the contacts. The current flowing into the load 10 is shunted by the contact resistance and the resistance that the fuse F1 has. Consequently, an inrush current when turning on the thermostat T1 (which refers to bringing about a state in which terminals on the both ends of the thermostat T1 are connected), the time of a failure of the load 10, or the like may cause the fuse F1 to be blown even if the thermostat T1 is in the on state. FIG. 12 is an explanatory diagram showing a configuration example of the switching device 100 including the diodes D1, D2 bidirectionally downstream of the thermostat T1 and the fuse F1 shown in FIG. 7.

In this manner, by bidirectionally providing the diodes D1, D2 downstream of the thermostat T1 and the fuse F1, shunting to the fuse F1 is restrained until a certain constant voltage occurs between the terminals of the thermostat T1.

### <2. Application example>

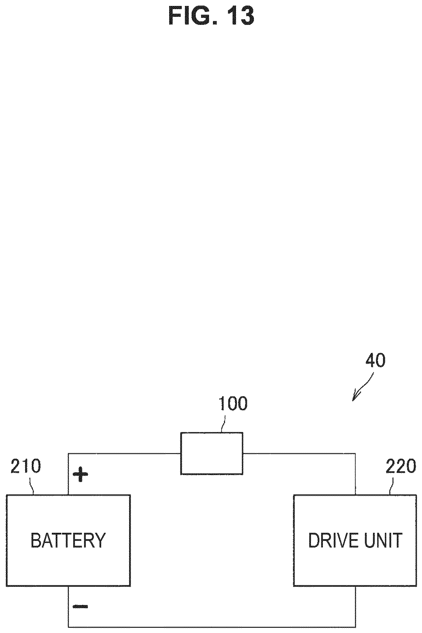

FIG. 13 is an explanatory diagram showing an exemplary functional configuration of a movable body 40 including the switching device 100. For example, the movable body 40 may be a movable body powered by an engine, such as a gasoline vehicle, or may be a movable body mainly powered by a chargeable and dischargeable battery, such as an electric vehicle, a hybrid vehicle, or an electric motorcycle. Further, the movable body 40 may be a movable body, such as an airplane, or a vessel. FIG. 13 shows an example of a case where the movable body 40 is provided with a battery 210 and a drive unit 220 driven by power supplied from the battery. The drive unit 220 may include, for example, equipment provided for a vehicle, such as a wiper, a power window, a light, a car navigation system, and an air conditioner, a device that drives the movable body 40, such as a motor, and the like.

The movable body 40 shown in FIG. 13 is provided with the switching device 100 on the way of a path along which DC power is supplied from the battery 210 to the drive unit 220. With the switching device 100 provided on the path along which DC power is supplied from the battery 210 to the drive unit 220, the movable body 40 shown in FIG. 13 can suppress occurrence of an arc discharge when temporarily attaching/detaching the battery 210, for example.

Note that FIG. 13 shows an example of the movable body 40 provided with only one switching device 100, whilst the present disclosure is not limited to such an example. That is, a plurality of switching devices 100 may be provided on the way of the path along which DC power is supplied. Moreover, not only on the way of the path along which DC power is supplied from the battery 210 to the drive unit 220, the switching device 100 may also be provided at another place, for example, on the way of a path when charging the battery 210 with DC power. With the switching device 100 provided on the way of the path when charging the battery 210 with DC power, the movable body 40 can allow the battery 210 to be charged with the DC power safely.

By providing the switching device 100 according to the present embodiment for the movable body 40, in the case where an unexpectedly large current flows in the drive unit 220 at the time of a failure or the like, it is possible to interrupt the current safely without causing an arc to occur.

### <3. Conclusion>

According to an embodiment of the present disclosure as described above, a switching device including a fuse in parallel with a mechanical switch or a thermostat, a movable body including such a switching device, and a power supply system are provided.

In the switching device according to an embodiment of the present disclosure, the fuse is not blown in the state where the mechanical switch or thermostat is supplying power from the power source to the load, and the fuse is blown by a current flowing into the fuse in the state where the mechanical switch or thermostat interrupts power supply from the power source.

In this manner, by flowing a current into the fuse in the state where the mechanical switch or thermostat interrupts power supply from the power source to blow the fuse, the switching device according to an embodiment of the present disclosure can prevent occurrence of an arc when the mechanical switch or thermostat interrupts power supply from the power source.

Note that the case of interrupting the current from the DC power source has been described in the above-described example, whilst the present disclosure is not limited to such an example. An arc may also occur when interrupting a current from an AC power source that supplies a large voltage and current. Consequently, the switching device 100 described above may also be used for interrupting power from the AC power source.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A switching device including:
   a switch provided for a system configured to flow power; and
   a fuse provided in parallel with the switch, a conductor being sealed in the fuse, in which
   the fuse is not blown by a current flowing in a state where the switch is closed with respect to the system, and is blown by a current flowing in a state where the switch is opened with respect to the system, and
   when the switch is brought into the state where the switch is closed from the state where the switch is opened with respect to the system, the fuse is replaced by an unblown fuse.
(2) The switching device according to (1), including:
   a resistor connected to the switch in the state where the switch is opened with respect to the system.
(3) The switching device according to (1) or (2), in which
   the switch has a mechanical mechanism.
(4) The switching device according to (3), including:
   a replacing unit configured to replace a blown fuse with an unblown fuse when the switch is brought into the state where the switch is closed from the state where the switch is opened with respect to the system.
(5) The switching device according to (1), in which
   the switch is a heat-responsive switch configured to be brought into the state where the heat-responsive switch is opened when a temperature of a load that receives the power becomes more than or equal to a predetermined value.
(6) The switching device according to any of (1) to (6), including:
   a current restriction unit configured to restrict a current to the fuse downstream of the switch and the fuse.
(7) The switching device according to (6), in which
   the current restriction unit includes at least a set of diodes provided both in a forward direction from the switch to the fuse and a reverse direction.
(8) The switching device according to any of (1) to (7), in which
   the power is DC power.
(9) A movable body including:
   the switching device according to any of (1) to (8).
(10) A power supply system including:
   a battery configured to supply DC power;
   a drive unit configured to be driven by the DC power supplied from the battery; and
   at least one switching device according to any of (1) to (8) provided between the battery and the drive unit.

### Reference Signs List

- 40: movable body
- 100: switching device
- 111: switch lever
- 112: lever supporting point
- 113: fuse holder
- 210: battery
- 220: drive unit
- D1: diode
- D2: diode
- F1: fuse
- F2: fuse
- R1: resistor
- SW1: switch
- T1: thermostat

## Claims

1. A switching device comprising:
a switch provided for a system configured to flow power; and
a fuse provided in parallel with the switch, a conductor being sealed in the fuse, wherein
the fuse is not blown by a current flowing in a state where the switch is closed with respect to the system, and is blown by a current flowing in a state where the switch is opened with respect to the system, and
when the switch is brought into the state where the switch is closed from the state where the switch is opened with respect to the system, the fuse is replaced by an unblown fuse.

2. The switching device according to claim 1, comprising:
a resistor connected to the switch in the state where the switch is opened with respect to the system.

3. The switching device according to claim 1, wherein
the switch has a mechanical mechanism.

4. The switching device according to claim 3, comprising:
a replacing unit configured to replace a blown fuse with an unblown fuse when the switch is brought into the state where the switch is closed from the state where the switch is opened with respect to the system.

5. The switching device according to claim 1, wherein
the switch is a heat-responsive switch configured to be brought into the state where the heat-responsive switch is opened when a temperature of a load that receives the power becomes more than or equal to a predetermined value.

6. The switching device according to claim 1, comprising:
a current restriction unit configured to restrict a current to the fuse downstream of the switch and the fuse.

7. The switching device according to claim 6, wherein
the current restriction unit includes at least a set of diodes provided both in a forward direction from the switch to the fuse and a reverse direction.

8. The switching device according to claim 1, wherein
the power is DC power.

9. A movable body comprising:
the switching device according to claim 1.

10. A power supply system comprising:
a battery configured to supply DC power;
a drive unit configured to be driven by the DC power supplied from the battery; and
at least one switching device according to claim 1 provided between the battery and the drive unit.
